# EUROPÄISCHE PATENTSCHRIFT

(11) **EP 3 175 124 B1**
(45) Veröffentlichungstag und Bekanntmachung des Hinweises auf die Patenterteilung: **05.05.2021**
(21) Anmeldenummer: 15738298.7
(22) Anmeldetag: 09.07.2015
(51) Int. Cl.: F16B 5/01, F16B 13/10

(54) **BEFESTIGUNGSVORRICHTUNG FÜR EIN SANDWICHBAUTEIL**
FASTENING DEVICE FOR A SANDWICH COMPONENT
DISPOSITIF DE FIXATION D'UN ÉLÉMENT STRUCTURAL EN SANDWICH

(30) Priorität: 30.07.2014 DE 102014214903
(43) Veröffentlichungstag der Anmeldung: 07.06.2017
(73) Patentinhaber: Bayerische Motoren Werke Aktiengesellschaft, 80809 München (DE)
(72) Erfinder: HOLZINGER, Michael, 85386 Eching (DE); HAMMER, Maik, 84079 Bruckberg (DE); STARKE, Joachim, 81375 München (DE)
(86) Internationale Anmeldenummer: PCT/EP2015/065652
(87) Internationale Veröffentlichungsnummer: WO 2016/015969

(56) Entgegenhaltungen:
- DE-A1-102006 049 953
- DE-A1-102011 002 031
- DE-U1-202009 000 017
- US-A- 3 455 201
- US-A- 3 579 942

## Beschreibung

Die Erfindung betrifft eine Befestigungsvorrichtung und ein Verfahren zum Herstellen einer integrierten Befestigungsmöglichkeit an bzw. in einem Sandwichbauteil mit einer solchen Befestigungsvorrichtung. Sandwichbauteile im Sinne der vorliegenden Erfindung sind Mehrschichtbauteile mit wenigstens einer "weichen" Kernschicht und einer oberen und unteren Deckschicht mit höherer Festigkeit als die Kernschicht, bevorzugt hergestellt aus einem faserverstärktem Material. Die Erfindung betrifft insbesondere eine zusammensteckbare Befestigungsvorrichtung zur Einsteckmontage in eine Öffnung eines Sandwichbauteils, wie zum Beispiel eines CFK-Sandwichbauteils, bestehend aus zwei zusammensteckbaren Elementen, wobei an einem Element von einer Montageposition in eine Fixierposition betätigbare Fixierarme angeordnet sind, die in den Kern des Sandwichbauteils mechanisch eindringen, so dass ein Kraftschluss mit dem Sandwichbauteil hergestellt wird.

Es werden zunehmend Sandwichbauteile, wie zum Beispiel CFK-Sandwichplatten, bei der Erstellung von Konstruktionen oder im Fahrzeugbau und dergleichen verwendet. Mit Sandwich-Platten lässt sich ein Maximum an Biegesteifigkeit bei gleichzeitiger Gewichtseinsparung erreichen. Durch ihre Bauweise kann einerseits eine große Steifigkeit bei andererseits vergleichsweise niedrigem Gewicht erzielt werden. Sandwichplatten sind in den unterschiedlichsten Ausführungsvarianten erhältlich. In der Regel bestehen Sandwichplatten aus zwei außen liegenden Decklagen und einem dazwischen liegenden Kern. So besteht zum Beispiel eine Kohlefaser-Epoxid-Sandwichplatte aus zwei Decklagen aus Kohlefasergewebe mit einem Epoxidharz und einem Kern aus PVC-Hartschaum.

Grundsätzlich besteht ein Bedürfnis danach, Sandwichbauteile untereinander bzw. mit anderen Bauteilen zu verbinden oder Teile und Elemente daran zu befestigen. Die Krafteinleitung zur Herstellung von Verbindungspunkten bereitet in der Praxis allerdings ein großes Problem. Anders als bei massiven Bauteilen und Platten, wie zum Beispiel Kunststoffplatten und Metallplatten, an denen sich Gewinde leicht einformen lassen, ist dies bei einer geschäumten Sandwichplatte bedingt durch den Schaumkern nicht möglich.

Im Stand der Technik sind zwei herkömmliche Verfahren bekannt, um Verbindungspunkte an Sandwichplatten herzustellen. Ein Verfahren betrifft das Umspritzen bzw. Umschäumen der Verbindungselemente mit dem Kernschichtmaterial, z. B. einem Schaum der Sandwichplatte (In-Moulding-Verfahren). Dabei werden zum Beispiel metallische Gewindeeinsätze schon während des Herstellungsprozesses in das Sandwichbauteil integriert. Hierzu müssen allerdings die benötigten Einsätze, wie zum Beispiel die genannten Gewindeeinsätze, zwischen die Decklagen (CFK-Platten) manuell oder mittels industrieller Handhabungstechnik eingelegt werden und anschließend mit dem Schaummaterial umspritzt werden. Die auf diese Weise hergestellte stoffschlüssige Verbindung kann danach mechanisch belastet werden.

Nachteilig ist dabei unter anderem der Umstand, dass bereits bei der Herstellung die Lage der Verbindungspunkte feststehen muss. Ferner bereiten Form- und Lagetoleranzen und der damit verbundene Toleranzausgleich weitere Probleme. Werden später weitere oder andere vergleichbare Befestigungspunkte benötigt, so können diese nicht mehr ergänzt werden. Die Verbindung zwischen den Einsätzen und dem Sandwichbauteil erfolgt ferner über einen Stoffschluss mit dem Schaum beim Aushärten des Schaums, wodurch auch ein einfacher Austausch oder eine Reparatur ausgeschlossen ist.

Weiterhin sind Profilleisten und Verbindungsleisten aus dem Stand der Technik bekannt, die an der Außenseite der Sandwichbauteile typischerweise mittels die Platten durchdringender Schrauben befestigt werden. Exemplarisch wird hierzu die Druckschrift WO 2010/121830 A3 genannt. In dieser Druckschrift wird ein längliches Befestigungselement umfassend ein U-förmiges Leistenstück offenbart, eine in zwei Teilelemente aufgeteilte Profilleiste und eine Verbindungsvorrichtung, welche die Befestigung von Modulen unter Ausnutzung eines Klemmmechanismus ermöglicht. Eine solche spezielle Lösung ist aber ungeeignet, um Sandwichplatten mit Verbindungsmöglichkeiten auszustatten.

Eine weitere im Stand der Technik bekannte Form der Herstellung von Verbindungspunkten ist das Aufbringen von sogenannten "Onserts" auf die Sandwichplatten. "Onserts" sind speziell zur Verklebung gestaltete Verbindungselemente mit einem in der Regel tellerartigen Fußteil. Es gibt Onserts in unterschiedlicher Ausgestaltung. Vorteilhaft ist bei diesem Verfahren, dass eine Schwächung der Sandwichbauteile mangels Bearbeitung wie Bohren, Nieten oder dergleichen vermieden werden kann. Andererseits weisen diese Verbindungen die für Klebeverbindungen typischen Nachteile, wie die mangelnde Temperaturbeständigkeit und davon abhängige Festigkeitsermüdung, auf. Bei Querbelastungen neigen Klebeverbindungen zum sogenannten Abschälen, was ebenfalls von Nachteil ist und mit einer Schwächung der Festigkeit der Verbindung einhergeht. Ferner ist der Klebeprozess aufwendig und es bedarf definierter Prozess- und Aushärtezeiten bis eine Weiterverarbeitung erfolgen kann.

Bei der Herstellung von Leichtbaustrukturen ist es an diversen Positionen auch von Nachteil, wenn Bauteile, wie Onserts, mit Gewindestiften oder Gewindebuchsen aus dem Sandwichverbund hervorstehen.

Weitere Befestigungsvorrichtungen sind aus den Dokumenten DE 10 2006 049 956 A1, DE 10 2011 002 031 A1, DE 20 2009 000 017 U1, US 3 579 942 A und US 3 455 201 A bekannt.

Es ist daher Aufgabe der vorliegenden Erfindung, eine Verbindungsanordnung für ein Sandwichbauteil zu schaffen, die vorbesagte Nachteile überwindet. Die Anordnung soll ferner universeller einsetzbar sein und ohne Klebstoff eine gute mechanische Verbindung mit dem Sandwichbauteil erzeugen. Ferner ist es Aufgabe der vorliegenden Erfindung, ein Verfahren zur Herstellung einer Befestigungsmöglichkeit vorzuschlagen, wie eine solche Anordnung auf einfache und kostengünstige Weise an oder in dem Verbundbauteil integriert werden kann.

Diese Aufgabe wird gelöst mit einer Verbindungsanordnung mit den Merkmalen von Anspruch 1 und einem Verfahren zum Herstellen einer Befestigungsmöglichkeit mit den Merkmalen des nebengeordneten Anspruchs. Grundgedanke der vorliegenden Erfindung ist es, eine Klemmanordnung aus zwei zusammenwirkenden Elementen zu schaffen, bei dem das erste Element (Halteelement) in das Sandwichbauteil eingesetzt wird und das Halteelement mittels Betätigen eines zweiten Elements (Betätigungselement) in einen "klemmenden" Zustand mit dem Sandwichbauteil überführt wird. Die freien Enden der für die Klemmung vorgesehener Fixierarme des Halteelements werden unter Zugbeanspruch gegen die Deckschicht des Sandwichbauteils gedrückt, womit durch einen Formschluss auftretende Zugkräfte über die obere Deckschicht in das Formteil geleitet werden. Als "klemmend" im Sinne der vorliegenden Erfindung ist ein Zustand zu verstehen, bei dem ein definierter Abschnitt des ersten Bauteils kraftschlüssig und/oder formschlüssig an bzw. teilweise in das Kernmaterial hineingedrückt wird. Als Kernmaterial kann jede geeignete Struktur oder jedes geeignete Material verwendet werden, wie zum Beispiel ein Schaum, ein Metallschaum auf Basis textiler Vliese, extrudierbare Materialien, Stegplatten, Rippenstrukturen, Wabenstrukturen und dergleichen. Das Eindringen oder Eintauchen in die Zone zwischen den Deckschichten (Kernzone) kann zum Beispiel durch einen Haken, einen Vorsprung oder eine Rippe am Befestigungselement realisiert werden, der oder die in der klemmenden Position in das Kernmaterial, z. B. den Schaum oder einfach in den Hohlraum im Bereich der Kernzone, hineingedrückt werden. Erfindungsgemäß wird hierzu das Halteelement mit wenigstens einem von einer Montageposition in eine Fixierposition betätigbaren Fixierarm ausgestattet. Der Fixierarm kann durch Einschieben des Betätigungselements in das Halteelement von seiner Ruhelage (Montageposition) in seine Eingriffslage mit dem Kern (Fixierposition) betätigt werden. Ein weiterer Aspekt der vorliegenden Erfindung betrifft die geometrische Abstimmung der Elemente zueinander. In einem günstigen Fall soll das für den Kraftschluss wirksame obere Ende des Fixierarms einen Abstand von "Null" gegenüber der oberen Deckschicht haben und somit gegen die Deckschicht berührend anliegen, so dass bei Zugbeanspruchung unmittelbar die Zugkräfte über die obere Deckschicht in das Formteil eingeleitet werden. Jedenfalls ist der Abstand zwischen dem wirksamen Ende des Fixierarms und der oberen Deckschicht geeignet klein zu wählen, so dass andere an der Zusammenwirkung des Halteelements und des Betätigungselements einzuhaltende Abstandsmaße nicht größer ausfallen, womit insgesamt ein stabiler Festsitz erzielt werden kann.

In der allgemeinsten Ausführungsform der Erfindung wird eine zusammensteckbare zweiteilige Befestigungsvorrichtung zur Einsteckmontage in eine Öffnung eines Sandwichbauteils bereitgestellt, wobei die Befestigungsvorrichtung aus einem Halteelement mit einem oder mehreren von einer Montageposition in eine Fixierposition betätigbaren Fixierarm(en) sowie einem in eine Öffnung des Halteelementes einsteckbaren Betätigungselements besteht, und wobei das Betätigungselement in seiner in das Halteelement eingesteckten Position wenigstens einen Fixierarm in seine Fixierposition auslenkt. Zweiteilig im Sinne der vorliegenden Erfindung bezeichnet nicht zwingend eine vollständige Trennung der beiden Elemente, sondern eine funktionale Trennung. Ein Teil (Halteelement) dient der Haltefunktion und der andere Teil (Betätigungselement) der Überführung des ersten Teils von einer Montage in eine Halteposition.

In einer vorteilhaften Ausführungsform der Erfindung weisen die beiden zusammensteckbaren Elemente (Halteelement und Betätigungselement) im Wesentlichen eine zylindrische (topfähnliche) oder quaderförmige Hüllform auf, wobei auch eine zylindrische Form mit einer ellipsenförmigen Grundfläche verwendet werden kann.

Erfindungsgemäß wird ferner eine Befestigungsvorrichtung vorgeschlagen, bei der mehrere betätigbare Fixierarme radial umlaufend am vorzugsweise zylinderförmigen Halteelement angeordnet sind. Als "betätigbar" im Sinne der vorliegenden Erfindung wird eine vorzugsweise elastische Bewegung des Fixierarms von einer Montagestellung in eine Fixierstellung verstanden, wobei die Bewegung von der Montagestellung in die Fixierstellung durch aktive Auslenkung mittels des Betätigungselementes erfolgt.

Erfindungsgemäß verfügen die Fixierarme an ihrer vom Zentrum der Befestigungsvorrichtung im Wesentlichen nach außen gerichteten Seite über Eingriffselemente, die ausgebildet sind zum mechanischen Eindringen in ein Sandwichbauelement, wenn die Fixierarme von dem Betätigungselement in ihre Fixierposition betätigt werden. In dieser Stellung verkrallen sich die Eingriffselemente der Fixierarme im Schaum mit der Folge, dass die Befestigungsvorrichtung einen festen Sitz in dem Verbundbauteil erfährt.

Ein weiterer Aspekt der vorliegenden Erfindung betrifft die Ausgestaltung des Halteelements. Da das Ziel der vorliegenden Erfindung das Vorsehen einer geeigneten Befestigungsmöglichkeit an einem Verbundbauteil ist, wird das Halteelement mit einer gewünschten Kopplungsform, wie zum Beispiel einem Innengewinde, einem Gewindestift, einem Rastmechanismus oder dergleichen versehen. Mit Vorteil verfügt demnach das Halteelement über ein zentrales Befestigungselement zum Verbinden mit einem externen Befestigungselement.

Die beweglichen vorzugsweise elastischen Fixierarme sind in vorteilhafter Weise mit ihrem einen Ende am Halteelement befestigt, während das andere Ende als freies Ende ausgebildet ist. So kann der Anbindungspunkt des Fixierarms wie ein elastisches Scharnier arbeiten.

Erfindungsgemäß sind Betätigungsarme am Betätigungselement vorgesehen, die beim Einstecken des Betätigungselementes in die entsprechende Kavität bzw. Öffnung im Halteelement mit einer Steuerfläche entlang des jeweiligen Fixierarms so geführt werden, dass der Fixierarm in eine Richtung weg vom Betätigungsarm hin zum Verbundbauteil bewegt bzw. elastisch ausgelenkt wird. Das Betätigungselement arretiert in seiner vollständig eingeschobenen

Position den Fixierarm, so dass dieser daran gehindert wird, in seine ursprüngliche Montageposition (Ausgangsposition) zurückzukehren.

Bevorzugt ist es, wenn der oder die Betätigungsarme jeweils eine keilförmige Form aufweisen. Mittels einer wie zuvor beschriebenen konstruktiven Ausgestaltung lässt sich der Fixierarm kontinuierlich beim Steckvorgang in seine Fixierposition überführen.

Es ist in einer erfindungsgemäßen Ausführung der Befestigungsvorrichtung weiter vorgesehen, dass im zusammengesteckten Zustand des Betätigungselementes mit dem Halteelement der oder die Befestigungsarme mit ihrer zum Zentrum hinweisenden Seitenfläche gegen das zentralen Befestigungselement und mit der vom Zentrum wegweisenden Seitenfläche gegen den jeweils korrespondierend angeordneten Fixierarm anliegen. Durch diese wechselseitige Anlage der für die Fixierung des Haltelements vorgesehenen Funktionsbauteile wird ein besonders wirkungsvoller Festsitz im Verbundbauteil erzielt.

In einer besonders vorteilhaften Ausführungsform der Erfindung ist die Befestigungsvorrichtung aus Kunststoff hergestellt. Alternativ könnte das Betätigungselement auch aus Metall, zum Beispiel als Druckgussbauteil, ausgebildet sein oder aus einer Kombination von Metall und Kunststoff.

Bei der Erfindung ist ferner vorgesehen, dass am Halteelement und am Betätigungselement jeweils korrespondierend angeordnete Rastelemente vorgesehen sind, um das Betätigungselement in seiner in das Halteelement eingesteckten Position mit diesem zu verrasten.

Ein weiterer Aspekt der vorliegenden Erfindung betrifft ein Verfahren zum Herstellen einer integrierten Befestigungsmöglichkeit an bzw. in einem Sandwichbauteil mit einer wie zuvor beschriebenen Befestigungsvorrichtung mit wenigstens den folgenden Schritten:
- Einbringen eines Halteelementes der zuvor beschriebenen Befestigungsvorrichtung in eine dazu vorgesehene Öffnung im Sandwichbauteil oder direktes Einbringen in das Sandwichbauteil;
- Betätigen des Halteelements durch das Betätigungselement, so dass der oder die Fixierarme des Halteelements von ihrer Montageposition in ihre Fixierposition betätigt werden, derart, dass diese mit wenigstens einem zur Fixierung vorgesehenen Abschnitt in die Kernzone im Sandwichbauteil eindringen.

Das Verfahren kann durch folgende weitere Schritte charakterisiert sein:
- Herstellen einer einseitig offenen Öffnung, wie zum Beispiel einem Sackloch, in einem Sandwichbauteil zum Einbringen des Halteelements;
- Das Einbringen der Befestigungsvorrichtung kann unter Verwendung geeigneter Verfahren, wie Verdrücken des Kernmaterials, ggf. in Kombination mit Aufschmelzen mittels Reibung oder Ultraschall, erfolgen, wodurch gegebenenfalls bestimmungsgemäß auch eine Schweißverbindung zwischen einem Teil der Befestigungsvorrichtung und dem Sandwichbauteil erzeugt wird;
- Einbringen von Klebstoff zur Erzeugung einer Klebeverbindung, insbesondere zur Verbesserung der Kraftübertragung von der Befestigungsvorrichtung in das Sandwichbauteil.

Andere vorteilhafte Weiterbildungen der Erfindung sind in den Unteransprüchen angegeben bzw. werden nachstehend zusammen mit der Beschreibung der bevorzugten Ausführungsform anhand der Figuren näher erläutert.

So kann bei geeigneter geometrischer Bedingung zur Verhinderung einer rotatorischen Bewegung zwischen Sandwichbauteil und der Befestigungsvorrichtung einerseits und dem Halteelement mit dem Betätigungselement andererseits bereits vor Erreichen der Fixierposition sichergestellt werden, dass das vormontierte Befestigungselement mit dem Festschrauben einer Schraube, z. B. mit einem Akkuschrauber, durch die translatorische Bewegung zwischen Halteelement und Betätigungselement das "Einstecken" und "Fixieren" in einem Schritt möglich ist.

Weiter ist es möglich, die Klemmung in der Endposition durch eine ringförmige Materialaussparung zu erzielen, wodurch eine einfache und robuste Ausführung erzielt wird.

Es zeigen:
- Fig. 1: eine schematische Schnittansicht durch ein CFK-Sandwichbauteil;
- Fig. 2: eine schematische perspektivische Ansicht einer Ausführungsform einer zweiteiligen Befestigungsvorrichtung, einmal in der zusammengesteckten und einmal in der getrennten Position;
- Fig. 3: eine schematische Schnittansicht durch ein CFK-Sandwichbauteil gemäß Figur 1, in die das Halteelement der Befestigungsvorrichtung eingesetzt ist;
- Fig. 4: eine schematische Schnittansicht gemäß Figur 3, wobei in das Halteelement der Befestigungsvorrichtung das Betätigungselement eingesteckt ist; und

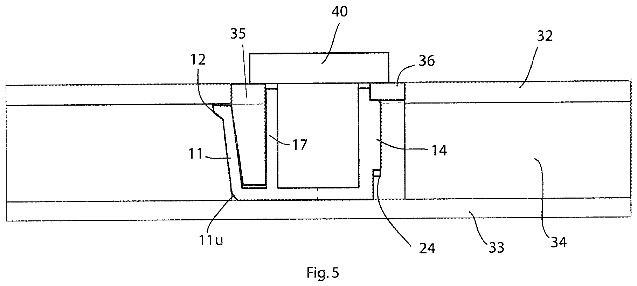

- Fig. 5: eine Ansicht ähnlich der Figur 4 in einem Endmontagezustand.

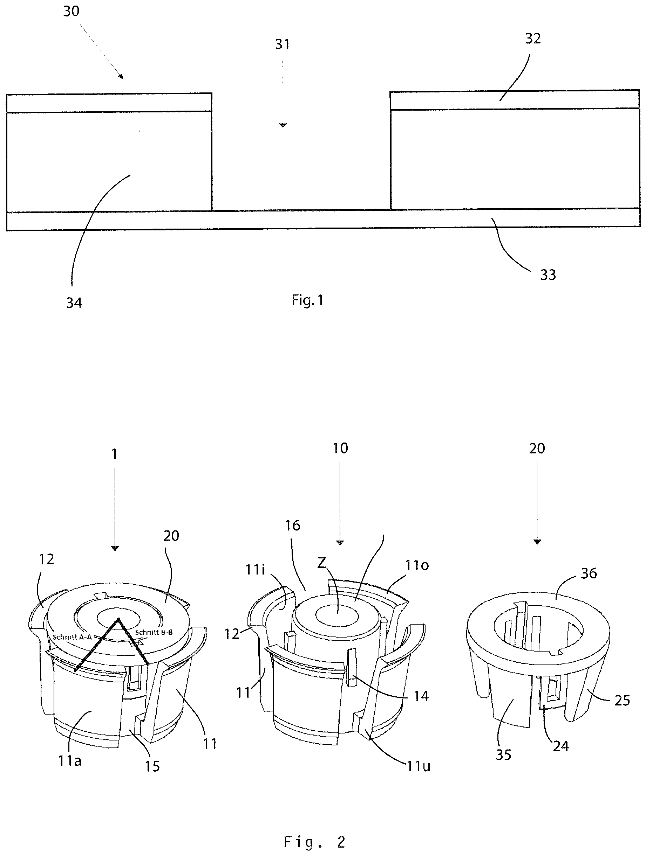

In der Fig. 1 ist eine schematische Schnittansicht durch ein CFK-Sandwichbauteil 30 gezeigt. Die gezeigte Sandwichplatte 30 besteht aus einer oberen CFK-Schicht 32 und einer unteren CFK-Schicht 33. In das CFK-Sandwichbauteil 30 ist eine Öffnung 31, und zwar als Sackloch eingebracht, so dass in diesem Bereich die untere CFK-Schicht 33 nicht durchtrennt ist. Zwischen der oberen und unteren CFK-Schicht 32, 33 befindet sich eine Kernzone 34. Im vorliegenden Ausführungsbeispiel ist die Kernzone 34 als eine mit Schaum gefüllte Zone ausgebildet. Das Sackloch muss ferner nicht zwingend wie dargestellt bis zur unteren Schicht 33 reichen und kann auch mit seinem Bodenabschnitt in einer anderen Ebene enden.

In der Figur 2 ist eine schematische perspektivische Ansicht einer Ausführungsform einer zweiteiligen Befestigungsvorrichtung 1 einmal in der zusammengesteckten Position (linke Ansicht der Figur 2) und einmal in der getrennten Position (mittlere und rechte Darstellung der Figur 2). Die zweiteilige Befestigungsvorrichtung 1 ist als zusammensteckbare Befestigungsvorrichtung 1 zur Einsteckmontage in die Öffnung 31 des CFK-Sandwichbauteils 30 ausgebildet. Die Befestigungsvorrichtung 1 besteht aus einem Halteelement 10 und einem Betätigungselement 20, hergestellt aus einem Kunststoffmaterial. Das Halteelement 10 ist mit vier von einer Montageposition in eine Fixierposition betätigbaren Fixierarmen 11 ausgebildet, die an der unteren Basisplatte 15 angeformt sind.

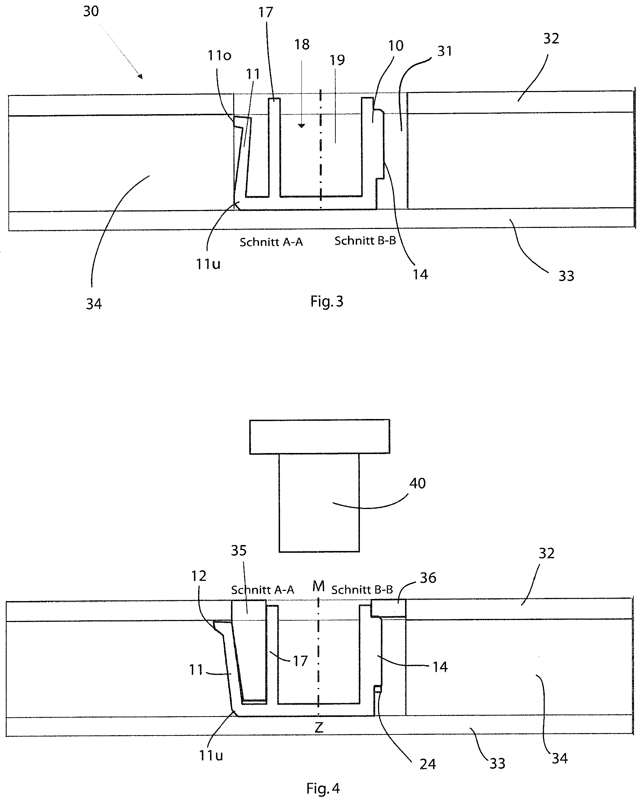

Im Zentrum Z des Halteelements 10 befindet sich ein zentrales Befestigungselement 17 zum Verbinden mit einem externen Befestigungselement 40, wie in Figur 3 gezeigt. Die beweglichen Fixierarme 11 sind mit ihrem einen (unteren) Ende 11u an dem Befestigungselement 17 befestigt, während das andere (obere) Ende 11o als freies Ende ausgebildet ist. Auf diese Weise ist der Fixierarm wie ein Federarm ausgebildet, der elastisch ausgelenkt werden kann. Das obere freie Ende 11o kann demnach vom Zentrum weg nach außen betätigt werden. Die vier Fixierarme 11 sind radial umlaufend am Halteelement 10 angeordnet, wobei jeweils zwei benachbarte Fixierarme durch einen Spalt 16 voneinander getrennt sind.

In der Figur 2 ist ferner ersichtlich, dass die vier Fixierarme 11 an ihrer vom

Zentrum Z im Wesentlichen nach außen gerichteten Seite 11a über Eingriffelemente 12 zum Eindringen in die Schaumzone 34 verfügen. Im vorliegenden Ausführungsbeispiel sind hierzu Vorsprünge am freien Ende der elastischen Fixierarme 11 angeformt. Diese dienen, wie später noch genauer bei der Figur 4 erläutert wird, dem mechanischen Eindringen in die Schaumzone 34 des Sandwichbauelements 30, sobald die Fixierarme 11 von dem Betätigungselement 20 in ihre Fixierposition betätigt werden.

Wie ferner in der isometrischen Ansicht der Figur 2 ersichtlich, sind am Halteelement 10 und am Betätigungselement 20 jeweils korrespondierend angeordnete Rastelemente 14, 24 vorgesehen, um das Betätigungselement 20 in seiner wie in Figur 4 gezeigten in das Halteelement 10 eingesteckten Position mit diesem zu verrasten. Hierdurch wird sichergestellt, dass sich das Betätigungselement 20 nicht unbeabsichtigt aus seiner Klemmposition löst, wodurch auch der Festsitz des Halteelements 10 nicht mehr sicher gewährleistet wäre. Am Betätigungselement 20 sind vier Betätigungsarme 35 vorgesehen ist, die beim Einstecken des Betätigungselementes 20 in das Halteelement 10 mit einer Steuerfläche 25 entlang des Fixierarms 11 so geführt werden, dass der jeweils zugeordnete Fixierarm 11 in eine Richtung weg vom Betätigungsarm 35 bewegt wird. Die Betätigungsarme 35 weisen eine keilförmige Form auf, die sich in Einsteckrichtung eines Ringelements 36 weg erstrecken. Vorliegend sind die Betätigungsarme 35 und die Fixierarme 11 in einem gleichmäßigen Winkelversatz von 90 Grad angeordnet, wie dies ebenfalls in Figur 4 gezeigt ist.

In der Figur 3 ist eine schematische Schnittansicht durch ein CFK-Sandwichbauteil gemäß Figur 1 gezeigt, in das zunächst nur das Halteelement 10 der Befestigungsvorrichtung 1 in die Öffnung 31 eingesetzt ist. Das Haltelement 10 stützt sich mit seiner Basisplatte 15 auf der Oberseite der unteren CFK-Schicht 33 ab. Die Schnittansicht der Figuren 3 und 4 folgt entlang der mittleren Abbildung der Figur 2. Erkennbar ist, dass die elastischen Fixierarme 11 benachbart zu ihrem unteren Ende 11u an der Innenseite der Öffnung 31 anliegen. Der Fixierarm 11 verläuft in seiner in der Figur 3 gezeigten Montageposition etwas geneigt zum Zentrum hin, vorzugsweise unter einem Winkel von 10 - 30 Grad gegenüber der vertikalen Mittelachse M durch das Zentrum Z. Das am oberen Ende 11o des Fixierarms 11 angeformte Eingriffselement 12 ragt mit seiner Stirnseite bis an die innere Seitenwand der Öffnung 31 in der Schaumzone 34. Die weiteren nicht in der Schnittansicht gezeigten Fixierarme sind in gleicher Weise orientiert und an der inneren Seitenwand anliegend angeordnet. Somit stehen sich jeweils zwei Fixierarme diametral gegenüber.

Das zentrale Befestigungselement 17 ist mit einem Innengewinde 19 ausgebildet zum Einschrauben eines externen Befestigungsmittels 40.

In der Figur 4 ist eine schematische Schnittansicht gemäß Figur 3 gezeigt, wobei in das Halteelement 10 der Befestigungsvorrichtung 1 das Betätigungselement 20 eingesteckt ist. In die Öffnung 18 im Halteelement 10 ist das korrespondierend hierzu geformte Betätigungselement 20 eingesteckt, wobei das Betätigungselement 20 mit seinen vier Betätigungsarmen 35 jeweils einen zugeordneten Fixierarm 11 in seine Fixierposition ausgelenkt hat.

Wie ferner in Figur 4 ersichtlich, liegen im zusammengesteckten Zustand des Betätigungselementes 20 mit dem Halteelement 10 die Befestigungsarme 31 mit ihrer zum Zentrum Z hinweisenden Seitenfläche gegen das zentralen Befestigungselement 17 und mit der vom Zentrum Z wegweisenden Seitenfläche gegen den jeweils korrespondierend angeordneten Fixierarm 11 an.

Die Figuren 1, 3 und 4 zeigen die wesentlichen Schritte des erfindungsgemäßen Verfahrens zum Herstellen einer integrierten Befestigungsmöglichkeit in einem Sandwichbauteil 30 unter Verwendung einer wie in Figur 2 gezeigten Befestigungsvorrichtung 1 wie folgt:

Zunächst erfolgt das Herstellen einer einseitig offenen Öffnung 31 in einem Sandwichbauteil 30. Danach wird das Halteelement 10 der Befestigungsvorrichtung 1 in die Öffnung 31 montiert. Im Anschluss daran wird in das Halteelement 10 das Betätigungselement 20 eingesteckt, so dass die Fixierarme 11 von ihrer Montageposition in ihre Fixierposition betätigt werden, derart, dass diese mit ihrem zur Fixierung vorgesehenen Abschnitt (Eingriffselemente 12) in das Sandwichbauteil 30 mechanisch eindringen. Bei einer ausreichend hohen Pressung kann dabei auch ein Teil des Armes in den Schaum eintauchen und lokal zu einer Verdichtung des Schaumes führen.
Die Erfindung beschränkt sich in ihrer Ausführung nicht auf die vorstehend angegebenen bevorzugten Ausführungsformen der Erfindung. Vielmehr ist im Rahmen der Ansprüche eine Anzahl von Varianten denkbar, welche von der dargestellten Lösung auch bei grundsätzlich anders gearteter Ausführung Gebrauch macht.

## Patentansprüche

1. Zusammensteckbare Befestigungsvorrichtung (1) zur Einsteckmontage in eine Öffnung (31) eines Sandwichbauteils (30) mit einer Kernschicht (34), bestehend aus einem Halteelement (10) mit mehreren von einer Montageposition in eine Fixierposition betätigbaren Fixierarmen (11),
wobei das Halteelement (10) über ein zentrales Befestigungselement (17) zum Verbinden mit einem externen Befestigungselement (40) verfügt,
wobei die Fixierarme (11) mit ihrem einen Ende (11u) an dem zentralen Befestigungselement (17) befestigt sind, während das andere Ende (11o) als freies Ende ausgebildet ist,
sowie aus einem in eine Öffnung des Halteelementes (10) einsteckbaren Betätigungselements (20),
wobei das Betätigungselement (20) Betätigungsarme (35) aufweist,
die so ausgebildet sind, dass die Fixierarme (11) beim Einstecken des Betätigungselementes (20) in das Halteelement (10) mit jeweils einer Steuerfläche (25) entlang eines Fixierarms (11) so geführt werden, dass der jeweilige Fixierarm (11) in eine Richtung weg vom Betätigungsarm (35) bewegt wird, derart, dass in der eingesteckten Position des Betätigungselements (20) in das Halteelement (10) die Fixierarme (11) von ihrer Montageposition in ihre Fixierposition ausgelenkt werden und die Fixierarme (11) an ihrer vom Zentrum (Z) im Wesentlichen nach außen gerichteten Seite (11a) über Eingriffselemente (12) verfügen, die zum mechanischen Eindringen in vorzugsweise die Kernschicht (34) des Sandwichbauteils (30) ausgebildet sind, wenn die Fixierarme (11) von dem Betätigungselement (20) in ihre Fixierposition betätigt werden, **dadurch gekennzeichnet, dass**
am Halteelement (10) und am Betätigungselement (20) jeweils korrespondierend angeordnete Rastelemente (14, 24) vorgesehen sind, welche ausgebildet sind, das Betätigungselement (20) in seiner in das Halteelement (10) eingesteckten Position mit diesem zu verrasten,
und das Betätigungselement (20) ausgebildet ist, in seiner vollständig eingeschobenen Position die Fixierarme (11) zu arretieren, so dass diese daran gehindert sind, in ihre ursprüngliche Montageposition zurückzukehren.

2. Befestigungsvorrichtung (1) gemäß Anspruch 1, **dadurch gekennzeichnet, dass** der oder die Betätigungsarme (35) eine keilförmige Form aufweisen.

3. Befestigungsvorrichtung (1) gemäß Anspruch 1 oder 2, **dadurch gekennzeichnet, dass** im zusammengesteckten Zustand des Betätigungselementes (20) mit dem Halteelement (10) der oder die Befestigungsarme (35) mit ihrer zum Zentrum (Z) hinweisenden Seitenfläche gegen das zentralen Befestigungselement (17) und mit der vom Zentrum (Z) wegweisenden Seitenfläche gegen den jeweils korrespondierend angeordneten Fixierarm (11) anliegen.

4. Befestigungsvorrichtung (1) gemäß einem der vorhergehenden Ansprüche, **dadurch gekennzeichnet, dass** die Befestigungsvorrichtung wenigstens im Bereich der elastischen Fixierarme (11) aus Kunststoff hergestellt ist.

5. Verfahren zum Herstellen einer integrierten Befestigungsmöglichkeit an bzw. in einem Sandwichbauteil (30) mit einer Befestigungsvorrichtung (1) gemäß einem der vorhergehenden Ansprüche, mit wenigstens den folgenden Schritten:
a. Einbringen eines Halteelementes (10) der Befestigungsvorrichtung (1) in eine dazu vorgesehene Öffnung im Sandwichbauteil (30);
b. Betätigen des Halteelements (10) durch das Betätigungselement (20), so dass der oder die Fixierarme (11) des Halteelements (10) von ihrer Montageposition in ihre Fixierposition betätigt werden, derart, dass diese mit wenigstens einem zur Fixierung vorgesehenen Abschnitt in die Kernzone im Sandwichbauteil (30) eindringen.

6. Verfahren nach Anspruch 5, **dadurch gekennzeichnet, dass** das Betätigungselement zusätzlich mittels eines geeigneten Verfahrens wie Kleben, Schweißen oder dergleichen mit dem Sandwichbauteil verbunden wird.

## Claims

1. Snap-together fastening device (1) for plug-in mounting into an opening (31) of a sandwich component (30) with a core layer (34) consisting of a holding element (10) with a plurality of fixing arms (11) which can be actuated from a mounting position into a fixing position,
wherein the holding element (10) has a central fastening element (17) for connecting to an external fastening element (40),
wherein the fixing arms (11) are fastened with their one end (11u) to the central fastening element (17), whereas the other end (11o) is configured as a free end,
and consisting of an actuating element (20) which can be plugged into an opening of the holding element (10),
wherein the actuating element (20) has actuating arms (35),
which are configured such that the fixing arms (11), when the actuating element (20) is plugged into the holding element (10), are each guided with a control face (25) along a fixing arm (11) in such a way that the respective fixing arm (11) is moved in a direction away from the actuating arm (35), in such a way that, in the position of the actuating element (20) in which it is plugged into the holding element (10), the fixing arms (11) are deflected from their mounting position into their fixing position, and, on their side (11a) which is directed from the centre (Z) substantially toward the outside, the fixing arms (11) have engagement elements (12) which are configured for mechanical penetration into preferably the core layer (34) of the sandwich component (30) when the fixing arms (11) are actuated by the actuating element (20) into their fixing position,
**characterized in that**
respectively correspondingly arranged latching elements (14, 24) are provided on the holding element (10) and on the actuating element (20), said latching elements being configured to latch the actuating element (20) to the holding element (10) in its position in which it is plugged into said holding element,
and the actuating element (20) is configured to lock the fixing arms (11) in its completely pushed-in position, with the result that said fixing arms are prevented from returning into their original mounting position.

2. Fastening device (1) according to Claim 1, **characterized in that** the actuating arm or arms (35) has/have a wedge-shaped form.

3. Fastening device (1) according to Claim 1 or 2, **characterized in that**, in the snapped-together state of the actuating element (20) to the holding element (10), the fastening arm or arms (35) bears/bear with its/their side face which points towards the centre (Z) against the central fastening element (17) and with the side face which points away from the centre (Z) against the respectively correspondingly arranged fixing arm (11).

4. Fastening device (1) according to one of the preceding claims, **characterized in that** the fastening device is produced from plastic at least in the region of the elastic fixing arms (11).

5. Method for producing an integrated fastening possibility on or in a sandwich component (30) with a fastening device (1) according to one of the preceding claims, having at least the following steps:
a. introducing a holding element (10) of the fastening device (1) into an opening which is provided to this end in the sandwich component (30) ;
b. actuating the holding element (10) by way of the actuating element (20), with the result that the fixing arm or arms (11) of the holding element (10) is/are actuated from its/their mounting position into its/their fixing position, in such a way that it/they penetrates/penetrate with at least one section which is provided for fixing into the core zone in the sandwich component (30).

6. Method according to Claim 5, **characterized in that** the actuating element is additionally connected to the sandwich component by means of a suitable method such as adhesive bonding, welding or the like.

## Revendications

1. Dispositif de fixation enfichable (1) destiné à être monté par enfichage dans une ouverture (31) d'un composant en sandwich (30) pourvu d'une couche centrale (34), ledit dispositif comprenant un élément de retenue (10) muni d'une pluralité de bras de fixation (11) qui peuvent être actionnés d'une position de montage à une position de fixation,
l'élément de retenue (10) disposant d'un élément de fixation central (17) destiné à être relié à un élément de fixation extérieur (40),
une extrémité (11u) des bras de fixation (11) étant fixée à l'élément de fixation central (17), tandis que l'autre extrémité (11o) est conçue comme une extrémité libre,
ainsi qu'un élément d'actionnement (20) qui peut être enfiché dans une ouverture de l'élément de retenue (10),
l'élément d'actionnement (20) comportant des bras d'actionnement (35)
qui sont conçus de façon à guider, lors de l'enfichage de l'élément d'actionnement (20) dans l'élément de retenue (10), les bras de fixation (11), munis chacun d'une surface de commande (25), le long d'un bras de fixation (11) de façon à déplacer le bras de fixation respectif (11) dans une direction s'éloignant du bras d'actionnement (35), de façon à dévier, lorsque l'élément d'actionnement (20) est en position enfichée dans l'élément de retenue (10), les bras de fixation (11) de leur position de montage à leur position de fixation et les bras de fixation (11) disposant sur leur côté (11a), dirigés du centre (Z) sensiblement vers l'extérieur, d'éléments d'engagement (12) qui sont conçus pour pénétrer mécaniquement de préférence dans la couche centrale (34) du composant en sandwich (30) lorsque les bras de fixation (11) sont actionnés par l'élément d'actionnement (20) dans leur position de fixation,
**caractérisé en ce que**
des éléments d'encliquetage (14, 24) sont prévus au niveau de l'élément de retenue (10) et de l'élément d'actionnement (20), lesquels éléments d'encliquetage sont disposés en conséquence et sont conçus pour encliqueter l'élément d'actionnement (20) avec l'élément de retenue (10) dans sa position enfiché dans celui-ci,
et l'élément d'actionnement (20) est conçu pour bloquer les bras de fixation (11) dans sa position complètement rétractée de façon à empêcher lesdits bras de fixation de revenir à leur position de montage d'origine.

2. Dispositif de fixation (1) selon la revendication 1, **caractérisé en ce que** le ou les bras d'actionnement (35) ont une forme de coin.

3. Dispositif de fixation (1) selon la revendication 1 ou 2, **caractérisé en ce que**, lorsque l'élément d'actionnement (20) est assemblé avec l'élément de retenue (10), le ou les bras de fixation (35) viennent en appui, avec leur surface latérale dirigée vers le centre (Z), contre l'élément de fixation central (17) et, avec la surface latérale dirigée à l'opposé du centre (Z), contre le bras de fixation (11) disposé de manière correspondante.

4. Dispositif de fixation (1) selon l'une des revendications précédentes, **caractérisé en ce que** le dispositif de fixation est fabriqué à partir d'une matière synthétique au moins au niveau des bras de fixation élastiques (11).

5. Procédé de réalisation d'une possibilité de fixation intégrée sur ou dans un composant en sandwich (30) au moyen d'un dispositif de fixation (1) selon l'une des revendications précédentes, le procédé comprenant au moins les étapes suivantes :
a. introduire un élément de retenue (10) du dispositif de fixation (1) dans une ouverture ménagée à cet effet dans le composant en sandwich (30) ;
b. actionner l'élément de retenue (10) par le biais de l'élément d'actionnement (20) de façon à actionner le ou les bras de fixation (11) de l'élément de retenue (10) de leur position de montage à leur position de fixation, de manière qu'ils pénètrent, avec au moins une portion prévue pour la fixation, dans la zone centrale du composant en sandwich (30).

6. Procédé selon la revendication 5, **caractérisé en ce que** l'élément d'actionnement est en outre relié au composant en sandwich au moyen d'un procédé approprié tel que le collage, le soudage ou analogue.
